# EUROPÄISCHE PATENTSCHRIFT

(11) **EP 0 465 838 B1**
(45) Veröffentlichungstag und Bekanntmachung des Hinweises auf die Patenterteilung: **06.09.1995**
(21) Anmeldenummer: 91109355.7
(22) Anmeldetag: 07.06.1991
(51) Int. Cl.: B66F 17/00

(54) **Lastaufnahmefahrzeug mit Kippsicherung**
Load pick-up vehicle with anti-tip security device
Véhicule porte-charge avec securité contre le basculement

(30) Priorität: 11.07.1990 DE 4021984
(43) Veröffentlichungstag der Anmeldung: 15.01.1992
(73) Patentinhaber: STEINBOCK BOSS GmbH Fördertechnik, 85368 Moosburg (DE)
(72) Erfinder: Eilenlehner, Eduard, W-8052 Moosburg (DE)
(74) Vertreter: Weickmann, Heinrich, Dipl.-Ing.

(56) Entgegenhaltungen:
- DE-B- 1 056 343
- FR-A- 1 208 801
- FR-A- 2 356 592
- FR-A- 2 574 389
- GB-A- 2 061 849
- US-A- 2 774 437
- US-A- 3 494 494
- US-A- 3 848 750

## Beschreibung

Die Erfindung betrifft ein Lastaufnahmefahrzeug, insbesondere Gabelstapler, umfassend einen Fahrzeugrahmen mit einer Vorderachse und mit einer eine lenkbare Hinterachse aufweisenden Hinterachsbaugruppe, wobei mindestens ein Rad der Vorderachse oder/und der Hinterachsbaugruppe antreibbar ist, eine vorderachsnah an dem Fahrzeugrahmen oder der Vorderachse angeordnete Lastaufnahme, wenigstens ein an dieser Lastaufnahme angreifendes, die Größe eines Lastmoments beeinflussendes Kraftgerät, eine Antriebs- und Steuereinrichtung für dieses Kraftgerät und eine Sicherheitseinrichtung gegen Kippen um die Vorderachse, die in Wirkverbindung mit der Antriebs- und Steuereinrichtung für das Kraftgerät und/oder einem Warnsignalgeber steht, wobei der Fahrzeugrahmen gegenüber der Hinterachsbaugruppe bei Überschreiten eines Nennlastmoments begrenzt anhebbar ist und wobei die Sicherheitseinrichtung eine Sensoreinrichtung zum Erfassen der Relativbewegung zwischen dem Fahrzeugrahmen und der Hinterachsbaugruppe aufweist.

Während des Betriebs herkömmlicher Lastaufnahmefahrzeuge ist es nicht auszuschließen, daß Lasten so aufgenommen werden, daß die zulässigen Lastmomente überschritten und ein Kippen des Fahrzeugs über die Vorderachse eingeleitet wird. Das Kippen kann dabei zum einen durch das Gewicht einer Last oder zum anderen durch eine Veränderung des Schwerpunktabstandes der Last zu der Vorderachse hervorgerufen werden. Im Grenzbereich zum Kippen kann darüber hinaus die Lenkachsbaugruppe des Fahrzeugs so entlastet werden, daß ein für eine sichere Lenkung ausreichender Raddruck der Hinterachsbaugruppe nicht mehr vorhanden ist.

Ein Lastaufnahmefahrzeug der eingangs genannten Art ist aus der FR-A-25 74 389 bekannt. Bei diesem bekannten Lastaufnahmefahrzeug ist die Hinterachsbaugruppe über eine Gelenkverbindung an dem Fahrzeugrahmen angeordnet, so daß der Fahrzeugrahmen bei Einsetzen der Kippbewegung des Fahrzeugs eine Schwenkbewegung um die horizontal verlaufende Achse der Gelenkanordnung relativ zur Hinterachsbaugruppe ausführen kann. Zur Begrenzung der Schwenkbewegung sind Anschläge vorgesehen, die auf eine den Fahrzeugrahmen abstützende Trägerplatte der Hinterachsbaugruppe bewirken. Die Schwenkbewegung des Rahmens relativ zu der Trägerplatte der Hinterachsbaugruppe wird durch eine Sensoreinrichtung erfaßt, die abhängig von der Schwenkamplitude eine Schalteinrichtung betätigt, welche mit optischen Signalgebern verbunden ist. Die optischen Signalgeber zeigen abhängig vom Grad der Schwenkstellung des Rahmens relativ zur Hinterachsbaugruppe anhand unterschiedlicher Lichtfarben an, ob Normalbetrieb, Übergang zum unzulässigen Betrieb oder unzulässiger Betrieb vorliegt. Im Falle des unzulässigen Betriebs unterbricht ein Elektroventil die Versorgung eines Handhabungswerkzeuges für die Last. Zur Einstellung der Empfindlichkeit dieses Schwenkerfassungssystems ist eine dem Schwerkraftmoment des Fahrzeugrahmens entgegenwirkende Druckfeder vorgesehen, die sich einerseits an der Trägerplatte der Hinterachsbaugruppe und andererseits am Fahrzeugrahmen abstützt. Die schwenkbewegliche Anordnung der Hinterachsbaugruppe am Fahrzeugrahmen, die Abstützung des Fahrzeugrahmens an der Hinterachsbaugruppe und die Detektion der Relativbewegung zwischen Fahrzeugrahmen und Hinterachsbaugruppe erfordern bei dem Lastaufnahmefahrzeug nach der FR-A-25 74 389 eine vergleichsweise aufwendige und insbesondere Platz in Anspruch nehmende Konstruktion.

Aus der DE-A-21 32 842 ist es bekannt, in einen für die Betätigung des hydraulisch wirkenden Kraftgerätes vorgesehenen Hydraulikkreis Sensoren so anzuordnen, daß bei Überschreitung fest eingestellter Grenzdrücke die Drehzahl eines zum Antrieb des Kraftgerätes dienenden Pumpenmotors reduziert wird bzw. dieser Motor ganz abgeschaltet wird. Die Absicherung des Hydraulikkreises bietet jedoch nur eine bedingte Absicherung des Fahrzeugs gegen Kippen, da durch den möglichen variablen Schwerpunktabstand der aufgenommenen Last bereits ein unzulässiges Kippmoment entstehen kann, obwohl das Gewicht der aufgenommenen Last noch unter der zulässigen Tragfähigkeit liegt. Insbesondere bei einem als Gabelstapler mit einem Freihub- bzw. Dreistufenhub-Gerüst ausgeführten Lastaufnahmefahrzeug kann in der ersten Hubstufe erheblich mehr Last als zulässig aufgenommen werden, da aufgrund der festgelegten Ausfahrfolge des Hubgerüstes mindestens zwei Druckstufen vorhanden sind, von denen in der Regel nur die höhere durch den Sicherheitssensor abgesichert ist. Weiterhin besteht bei solchen Lastaufnahmefahrzeugen, je nach Ausgestaltung des Fahrzeugs, erhebliche Kippgefahr, wenn bei hochgehobener Last das Hubgerüst nach vorne geneigt wird und sich der Schwerpunktabstand ändert.

Aus der DE-A-29 46 931 geht des weiteren ein Gabelstapler hervor, bei dem neben den Drucksensoren in dem Hydraulikkreis auch Sensoren für die Erfassung der Neigung des Hubgerüstes und für die Erfassung der Gabelhöhe in das Sicherungssystem gegen Kippen mit einbezogen werden. Ein solches System erfüllt zwar weitestgehend das Sicherungsbedürfnis, aber es erfordert komplizierte technische Einrichtungen und Auswerteprogramme für die Steuerung der Ventile bzw. Aggregate, was nicht nur hohe Kosten infolge der Vielzahl von teilweise hochwertigen Bauteilen zur Folge hat, sondern auch einen sehr hohen Montageaufwand.

Es ist Aufgabe der vorliegenden Erfindung, ein Lastaufnahmefahrzeug der eingangs genannten Art zu schaffen, bei dem die Anordnung der Hinterachsbaugruppe mit vergleichsweise einfachen und insbesondere platzsparenden Mitteln realisierbar ist, und bei dem dennoch ein Kippen um die Vorderachse auf einfache Weise zuverlässig verhindert wird.

Zur Lösung dieser Aufgabe wird erfindungsgemäß vorgeschlagen, daß die Hinterachsbaugruppe durch eine annähernd vertikal verlaufende Schlittenführung gegenüber dem Fahrzeugrahmen geführt ist. Eine derartige Linearführung der Hinterachsbaugruppe am Fahrzeugrahmen läßt sich platzsparend mit einfach aufgebauten Halterungs- bzw. Führungselementen verwirklichen.

Eine Kippbewegung des Lastaufnahmefahrzeugs wird trotz der einfach gestalteten Mittel zur Bereitstellung des Freiheitsgrades der Relativbewegung zwischen Fahrzeugrahmen und Hinterachsbaugruppe auf einfache Weise selbst und unmittelbar erfaßt. Ein Eingreifen der Sicherheitseinrichtung kann somit einerseits bereits zu Beginn jeder Kippbewegung erfolgen, andererseits erfolgt das Eingreifen der Sicherheitseinrichtung nur bei erfaßten Kippbewegungen. Darüber hinaus besteht die Möglichkeit, den infolge der Kippbewegung zurückgelegten Weg des Fahrzeugrahmens als Steuergröße zu verwenden. Hierdurch kann beispielsweise bei einem beginnenden Kippen die Antriebsleistung soweit verringert werden, daß ein weiteres Kippen ausgeschlossen ist. Auch kann das Kippmoment durch Absenken der Last reduziert werden, was ohne hydraulische Leistung möglich ist. Insgesamt weist das erfindungsgemäße Lastaufnahmefahrzeug dabei einen einfachen Aufbau auf.

Um während des normalen Fahrbetriebs dem Fahrzeug eine stabile Fahrlage zu verleihen, kann der Fahrzeugrahmen in Ruhestellung durch Anschläge gegenüber der Hinterachsbaugruppe abgestützt sein. Das Lastaufnahmefahrzeug erhält dadurch eine Fahrcharakteristik, wie sie bei gleichartigen Fahrzeugen ohne die erfindungsgemäße Ausgestaltung vorliegt.

Zwischen dem Fahrzeugrahmen und der Hinterachsbaugruppe kann eine Federung vorgesehen sein, welche zumindest in der Ruhelage, d. h. bei nichtgekipptem Fahrzeugrahmen, unter Vorspannung steht und sich bei einem Kippen des Fahrzeugrahmens teilweise oder vollständig entspannt. Die Hauptaufgabe einer solchen Federung besteht darin, daß bei Erreichen des Nennlastmoments, dann also, wenn das Kippen beginnt, ein ausreichender Lenkachsdruck an der Hinterachsbaugruppe zur Verfügung steht. Im Augenblick des Beginns des Kippens ist der Lenkachsdruck dann bestimmt, zum einen durch die Eigenmasse der Hinterachsbaugruppe und zum anderen durch die Vorspannung der Federung. Ist die Eigenmasse der bewegten Lenkachsteile größer oder gleich dem erforderlichen Lenkachsdruck, so kann die Federung entfallen. Natürlich kann die Federung auch evtl. entsprechende Reibungshemmungen in der Führung überwinden helfen, was allerdings bei den vorherrschenden Massen- und Kräfteverhältnissen kaum erforderlich sein wird. Die Federung bringt den großen Vorteil, daß bei Beginn des Kippens des Fahrzeugrahmens der Lenkachsdruck langsam abgebaut wird, entsprechend der Abnahme der Federvor-Spannung, während gleichzeitig die Sensoreinrichtung durch das beginnende Kippen des Fahrzeugrahmens aktiviert wird. Damit kann sichergestellt werden, daß der erforderliche Mindestlenkachsdruck erhalten bleibt, bis die Sensoreinrichtung die notwendigen Maßnahmen veranlaßt hat, um ein weiteres Kippen des Fahrzeugs zu unterbinden.

Für die Sensoreinrichtung können die unterschiedlichsten Bauelemente vorgesehen werden. So besteht die Möglichkeit, daß die Sensoreinrichtung als Ja/Nein-Sensor, insbesondere als Schalter, ausgebildet ist. Hierbei handelt es sich um eine besonders einfache, kostengünstige Sensoreinrichtung, die bei Feststellen einer Kippbewegung den Antrieb für das Kraftgerät stillsetzt, wobei aber beispielsweise noch ein Absenken der Last infolge ihres Eigengewichts möglich sein kann.

Da es möglicheweise zu Beginn einer Kippbewegung noch notwendig sein kann, die Lastaufnahme in eine einer weiteren Kippbewegung entgegenwirkende Lage bringen zu können, kann die Sensoreinrichtung auch als Analogsensoreinrichtung ausgebildet sein, welche ein in Abhängigkeit vom Anhebeweg variables Signal liefert. Somit kann der Antrieb des Kraftgerätes in der Weise gesteuert werden, daß mit zunehmender Kippbewegung die Antriebsleistung des Antriebs reduziert wird, bis schließlich ein Endwert erreicht ist, bei welchem der Antrieb für das Kraftgerät stillgesetzt wird. Auch hier kann dann beispielsweise ein Absenken der Last infolge ihres Eigengewichts möglich sein.

Für die Analogsensoreinrichtung können wiederum die unterschiedlichsten Bauelemente vorgesehen werden. Vorzugsweise kann die Analogsensoreinrichtung ein Schiebewiderstand, insbesondere Potentiometer, sein.

Ist als Kraftgerät ein hydraulisch wirkendes Kraftgerät vorgesehen, so kann die Sensoreinrichtung mit einer Steuerung zur Drehzahlregelung eines Antriebsmotors, vorzugsweise eines E-Motors, für eine Hydraulikpumpe Verbunden sein.

Das Lastaufnahmefahrzeug kann beispielsweise ein Frontlader oder aber ein Gabelstapler mit einem Hubgerüst sein. In dem zuletzt genannten Fall besteht die Möglichkeit, daß das Kraftgerät ein Hubgerät, insbesondere ein Hubzylinder, für ein längs des Hubgerüstes höhenverstellbaren Lastträger ist. Hierbei kann der Lastträger beispielsweise ein Lasttraggabel sein.

Das Kraftgerät kann hierzu alternativ ein Neigungsverstellungskraftgerät, insbesondere Neigungsverstellungszylinder, zur Neigungsverstellung eines Hubgerüstes der Lastaufnahme sein. Selbstverständlich kann auch vorgesehen werden, daß der Gabelstapler sowohl ein Kraftgerät zur Höhenverstellbarkeit des Lastträgers als auch zur Neigungsverstellung des Hubgerüstes aufweist. In einem solchen Fall ist es besonders vorteilhaft, wenn die Sensoreinrichtung durch eine Analogsensoreinrichtung gebildet ist, die ein die Drehzahl der Antriebseinrichtung langsam Verringerndes Signal erzeugt. Bei Beginn der Kippbewegung kann nämlich dann zunächst ein weiteres Anheben der Last verhindert werden. Gleichzeitig kann aber dem weiteren Kippen durch eine Neigungsverstellung des Hubgerüstes in der Weise entgegengewirkt werden, daß das Hubgerüst in Richtung auf den Fahrzeugrahmen geschwenkt wird, wodurch sich der Abstand des Schwerpunktes der aufgenommenen Last zu der Drehachse der Kippbewegung, d.h. zu der Vorderachse des Gabelstaplers verändert. Hierfür ist aber eine gewisse Antriebsleistung notwendig, die durch die in ihrer Leistung verringerte Antriebseinrichtung noch erbracht werden kann.

Kurzfristige Entlastungen der Lenkachsbaugruppe und daraus folgende ungewollte Schaltvorgänge durch die Sensoreinrichtung während des Fahrbetriebs, z. B. bei ruckartiger Lastaufnahme oder beim Befahren unebener Flächen (die Lenkachse neigt dann zum Springen) können weitestgehend dadurch vermieden werden, daß zwischen der Hinterachsbaugruppe und dem Fahrzeugrahmen ein Stoßdämpfer, vorzugsweise ein hydraulischer Stoßdämpfer, im wesentlichen vertikal eingebaut ist.

Neben der Beeinflussung des antreibbaren Kraftgerätes kann weiterhin vorgesehen werden, daß der mit der Sensoreinrichtung verbundene Warnsignalgeber ein optisches und/oder akustisches Warnsignal für die Bedienperson bzw. den Fahrer des Lastaufnahmefahrzeugs erzeugt.

Die Relativbewegungsmöglichkeit zwischen dem Fahrzeugrahmen und der Hinterachsbaugruppe sollte grundsätzlich so klein wie möglich gehalten werden. Die Mindestgröße dieser Relativbeweglichkeit wird primär vom Auflösungsbereich der Sensoreinrichtung, also etwa eines Potentiometers bestimmt. Bei herkömmlichen Potentiometern ist mit einem Relativweg von 10 - 20 mm auszukommen. Im übrigen hängt der Relativweg auch von der Fahrzeuggröße ab.
Weitere vorteilhafte Ausgestaltungen sowie ein Ausführungsbeispiel werden an Hand der Zeichnung nachstehend erläutert. Es zeigt:
- Fig. 1: eine teilweise aufgebrochene Seitenansicht eines erfindungsgemäßen Lastaufnahmefahrzeuges;
- Fig. 2: ein den Zusammenhang zwischen Lenkachsdruck und Lastmoment darstellendes Diagramm; und
- Fig. 3: einen hydraulischen Schaltplan für das erfindungsgemäße Lastaufnahmefahrzeug gemäß Fig. 1.

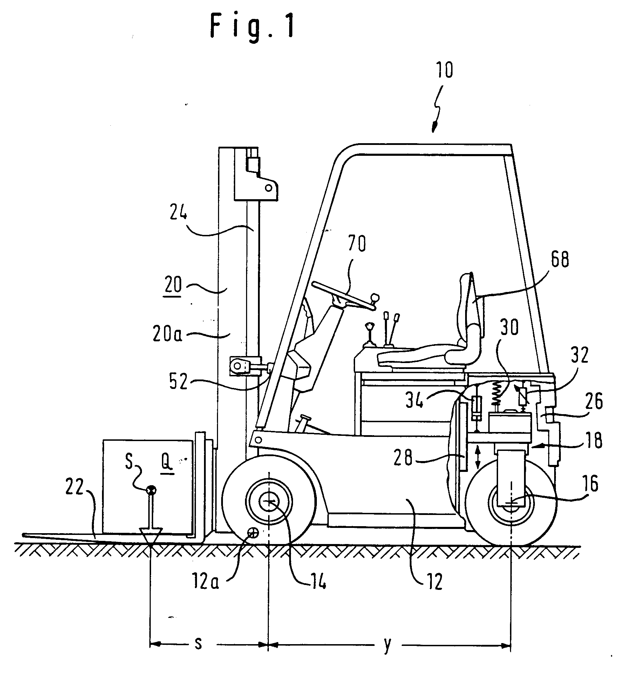

In Fig. 1 ist als Lastaufnahmefahrzeug ein Gabelstapler 10 mit einem Fahrzeugrahmen 12 gezeigt. An dem Fahrzeugrahmen 12 ist eine antreibbare Vorderachse 14 und mit dem Achsabstand y eine eine lenkbare Hinterachse 16 aufweisende Hinterachsbaugruppe 18 angeordnet. Vorderachsnah ist an dem Fahrzeugrahmen 12 ein um eine Achse 12a des Fahrzeugrahmens 12 schwenkbares Hubgerüst 20 angebracht. Dieses Hubgerüst 20 weist vertikal verlaufende Führungen 20a auf, in welchen ein eine Lastaufnahme bildender Lastträger 22 mittels eines hydraulisch wirkenden Hubzylinders 24 und nicht weiter dargestellter Kettentriebe höhenverstellbar geführt ist. Je nach erforderliche Hubhöhe kann das Hubgerüst 20 als Teleskophubgerüst ausgebildet sein. Dem Hubgerüst 20 gegenüberliegend weist der Gabelstapler 10 im Bereich der Hinterachsbaugruppe 18 ein masseergänzendes Gegengewicht 26 auf, welches einem Kippmoment um die Vorderachse 14 infolge einer auf dem Lastträger 22 angeordneten Last Q entgegenwirkt.

Die Hinterachsbaugruppe 18 ist als Drehschemellenkanordnung ausgeführt, wie sie in der für den gleichen Anmelder eingereichten DE-A-40 04 753.3-21 hervorgeht. Auf diese Anmeldung wird Bezug genommen. Die Hinterachsbaugruppe 18 ist über eine Schlittenführung 28 mit dem Fahrzeugrahmen 12 in der Weise verbunden, daß der Fahrzeugrahmen 12 gegenüber der Hinterachsbaugruppe 18 eine annähernd vertikale Relativbewegung ausführen kann. Der dabei von dem Fahrzeugrahmen maximal zurücklegbare Weg beträgt ca. 20 mm. In der Ruhestellung ist der Fahrzeugrahmen 12 gegenüber der Hinterachsbaugruppe 18 durch nicht weiter dargestellte Anschläge abgestützt. Zwischen der Hinterachsbaugruppe 18 und dem Fahrzeugrahmen 12 ist eine vorgespannte, dem Schwerkraftmoment des Gabelstaplers 10 entgegenwirkende und eine Federung bildende Schraubenfeder 30 angeordnet, die zum einen dafür sorgt, daß die Hinterachsbaugruppe 18 noch mit einem ausreichenden Raddruck auf dem Fahrboden aufsteht, wenn die Kippbewegung des Fahrzeugrahmens beginnt; zum anderen sorgt die Federung dafür, daß exakt nach Überschreiten des zulässigen Lastmoments die Relativbewegung zwischen dem Fahrzeugrahmen und der Hinterachsbaugruppe einsetzt.

Zur Erfassung der Kippbewegung ist ebenfalls zwischen der Hinterachsbaugruppe 18 und dem Fahrzeugrahmen 12, parallel zu der Schlittenführung 28 und vorzugsweise mit dem größtmöglichen Abstand zu der Vorderachse 14 die Sensoreinrichtung 32 angeordnet. In dem vorliegenden Fall ist die Sensoreinrichtung 32 ein analog arbeitendes Potentiometer, welches in Abhängigkeit des zurückgelegten Anhebewegs des Fahrzeugrahmens 12 ein Steuersignal zur Steuerung eines Antriebsmotors für den Hubzylinder 24 erzeugt.

Beginnt der Gabelstapler 10 infolge einer zu großen Last Q oder eines zu großen Abstandes s des Schwerpunktes S der Last Q zu der Vorderachse 14 des Gabelstaplers 10 zu kippen, wird der Fahrzeugrahmen 12 gegenüber der Hinterachsbaugruppe 18 angehoben. Die diese Anhebebewegung erfassende Sensoreinrichtung 32 führt daraufhin der Steuerung des Antriebsmotors für den Hubzylinder 24 ein Signal zu. Dieses Signal bewirkt eine Reduzierung der Antriebsleistung des Antriebsmotors, wodurch beispielsweise ein weiteres Anheben der Last Q nicht mehr möglich ist. Die reduzierte Antriebsleistung kann aber dafür ausreichend sein, das Hubgerüst 20, sofern dieses in seiner Neigung gegenüber dem Fahrzeugrahmen 12 verstellbar ist, in der Weise zu verschwenken, daß sich der Abstand s des Schwerpunktes S der Last Q gegenüber der Vorderachse 14 verringert. Einem weiteren Kippen des Gabelstaplers 10 wird hierdurch entgegengewirkt. Durch die Verringerung des Abstandes s wird erreicht, daß das der Kippbewegung entgegenwirkende Eigengewichtsmoment des Gabelstaplers 10 diesen wieder in seine ungekippte Ausgangsstellung zurückführt. Das Erreichen der Ausgangsstellung wird von der Sensoreinrichtung 32 ebenfalls erfaßt, wobei diese dann ein Signal an die Steuereinrichtung sendet, welche die Reduzierung der Antriebsleistung aufhebt. Anschließend kann die Last Q weiter angehoben werden.

Zwischen der Hinterachsbaugruppe 18 und dem Fahrzeugrahmen 12 ist weiterhin noch ein hydraulischer Stoßdämpfer 34 angeordnet.

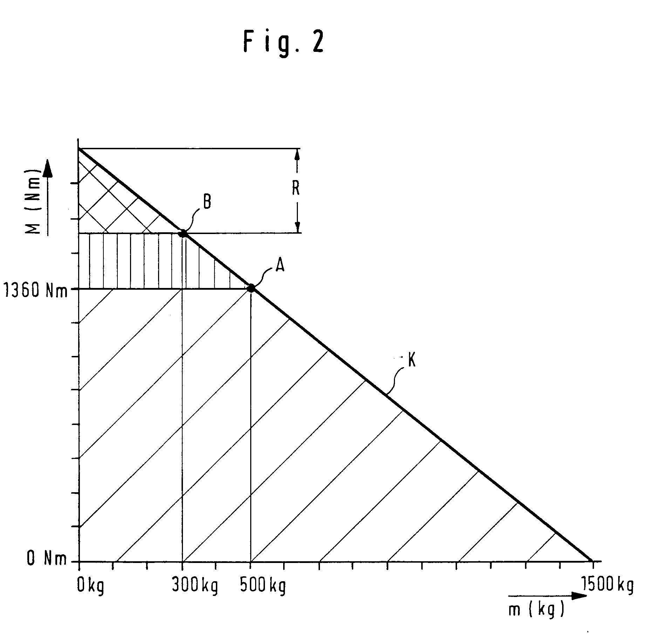

Der Zusammenhang zwischen einem ausreichenden Lenkachsdruck und dem Lastmoment ist in dem Diagramm gemäß Fig. 2 am Beispiel eines Staplers mit 1,6 t Nenntragfähigkeit dargestellt, wobei auf der Abszisse der Lenkachsdruck m in Kilogramm und auf der Ordinate das Lastmoment M als Produkt aus der durch die Last Q hervorgerufenen Gewichtskraft und dem Abstand s des Schwerpunkts S der Last Q zu der Vorderachse 14 in Newtonmeter (Nm) aufgetragen ist. Dabei ergibt sich der Abstand s aus dem horizontalen Abstand zwischen der Vorderachse 14 und der Hubgerüstschwenkachse 12a und aus dem horizontalen Abstand des Schwerpunkts S von der Hubgerüstachse 12a. Hat der Gabelstapler 10 noch keine Last Q auf seinem Lastträger 22 aufgenommen, so beträgt der Lenkachsdruck 1.500 kg. Sobald sich auf dem Lastträger 22 eine Förderlast Q mit dem Schwerpunktabstand s zu der Vorderachse 14 befindet, reduziert sich der Lenkachsdruck entsprechend, wobei zwischen dem Lastmoment und dem Lenkachsdruck ein linearer Zusammenhang besteht (Linie K). Bei einem Nennlastmoment in Höhe von 1.360 Nm beginnt eine Kippbewegung um die Vorderachse 14, wobei der Lenkachsdruck infolge der Vorspannung der Feder 30 und infolge des Eigengewichts der Hinterachsbaugruppe 18 noch 500 kg beträgt. Wächst das Lastmoment infolge der Vergrößerung der Last Q oder infolge einer Veränderung des Abstandes s noch weiter, so beginnt im Punkt A das Kippen, und die Feder 30 entspannt sich vom Punkt A bis zum Punkt B. Der Bereich A-B entspricht dem Verschiebebereich des Potentiometers. Bei Erreichen des Punktes B ist die Vorspannung der Feder 30 zu Null geworden, und der Lenkachsdruck ist auf 300 kg abgesunken entsprechend dem Eigengewicht der Hinterachsbaugruppe 18. Bei einsetzender Kippbewegung hat gleichzeitig die Drehzahlreduzierung für den Antriebsmotor des Hubzylinders 24 eingesetzt und ist beispielsweise mit linearer Absenkung spätestens bei einem Lenkachsdruck von 300 kg auf Null abgesunken. Die verbleibende Sicherheitsreserve R für das Lastmoment bzw. für den Lenkachsdruck dient dazu, beispielsweise eine nach Abstellen des Antriebsmotors infolge der Massenkräfte erfolgende weitere Kippbewegung auffangen zu können.

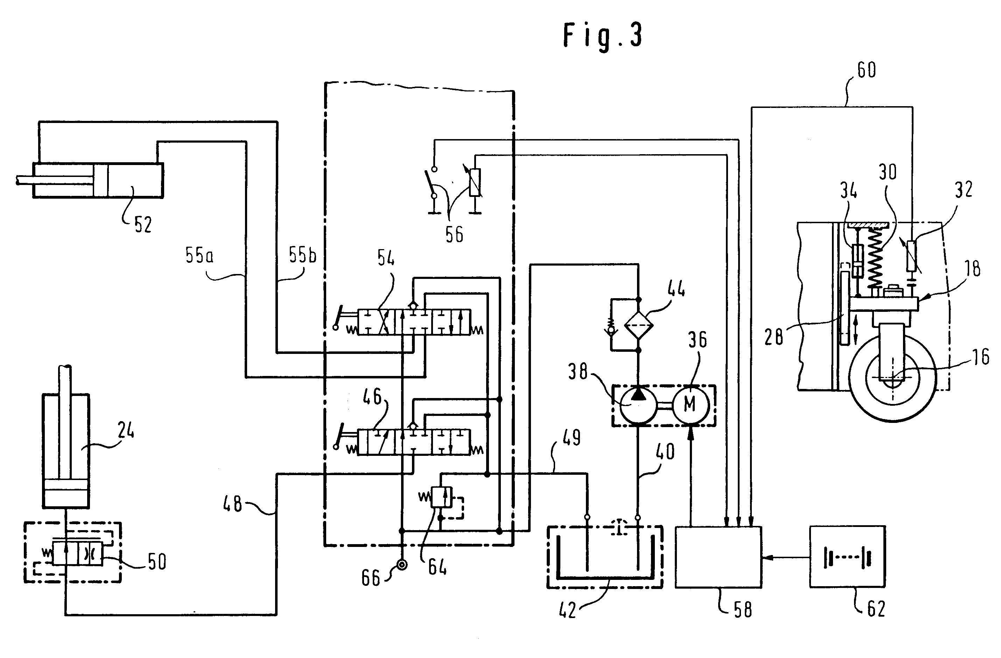

In Fig. 3 ist ein Hydraulik- und Elektrikschaltplan für den Gabelstapler 10 gemäß Fig. 1 gezeigt. Zum Antrieb des Hubzylinders 24 ist eine über einen E-Motor 36 antreibbare Hydraulikpumpe 38 vorgesehen. Die Hydraulikpumpe 38 fördert Hydraulik- bzw. Druckfluid durch eine Leitung 40 aus einem Vorratstank 42 über einen Filter 44 zu einem ersten solenoid gesteuerten Wegeventil 46. Je nach gewünschter Verfahrrichtung des Hubzylinders 24 wird dabei das Wegeventil 46 so gestellt, daß über die zwischen dem Wegeventil 46 und dem Hubzylinder 24 bestehende Leitungsverbindung 48 Hydraulikfluid zu dem Hubzylinder 24 geführt oder aber von diesem evakuiert werden kann. Vor dem Hubzylinder 24 ist in die Verbindungsleitung 48 noch ein Senkbremsventil 50 eingebaut. Soll der Hubzylinder 24 ausgefahren werden, so wird das Wegeventil 46 in Fig. 3 nach links verschoben. Soll dagegen der Hubzylinder 24 eingefahren und damit der Lastträger 22 abgesenkt werden, so wird das Wegeventil 46 nach rechts verschoben, wodurch über die Leitung 48 und über eine Leitung 49 Hydraulikfluid von dem Hubzylinder 24 zu dem Tank 42 fließen kann.

Das Hubgerüst 20 kann auch so ausgebildet sein, daß es zusätzlich um eine Achse 12a des Fahrzeugrahmens 12 verschwenkbar ist. Hierfür kann wenigstens ein Neigzylinder 52 vorgesehen sein (vgl. Fig. 1 und 3). Der Neigzylinder 52 kann ebenfalls durch die Hydraulikpumpe 38 über ein zweites solenoid betätigbares Wegeventil 54 mit Hydraulikfluid aus dem Vorratstank 42 beaufschlagt werden.

Je nachdem in welche Richtung das Hubgerüst 20 verschwenkt werden soll, wird hierbei das Wegeventil 54 geschaltet. Soll beispielsweise der Neigzylinder 52 ausgefahren werden, so wird das Wegeventil 54 in Fig. 3 nach rechts verschoben. Hierdurch kann dann Hydraulikfluid von dem Wegeventil 54 über eine Leitung 55a zu dem Neigzylinder 52 gelangen. Demgegenüber erfolgt bei einer Verschiebung des Wegeventils 54 in Fig. 3 nach links ein Einfahren des Neigzylinders 52, wobei das hierfür notwendige
Hydraulikfluid über eine Leitung 55b zu dem Neigzylinder 52 gelangt. Durch die Leitungen 55a,55b wird dabei jeweils wechselseitig das aus dem Neigzylinder 52 zu evakuierende Hydraulikfluid über das Wegeventil 54 zu der mit dem Vorratstank 42 verbundenen Leitung 49 geführt.

Zur Steuerung dieser Funktionen des Hubzylinders 24 und des Neigzylinders 52 können im Fahrerstand des Gabelstaplers 10 Steuerelemente vorgesehen sein, die in Fig. 3 allgemein mit 56 bezeichnet sind.

Zur Steuerung des Motors 36 der Hydraulikpumpe 38 ist eine Steuervorrichtung 58 vorgesehen, auf welche die Steuerelemente 56 und die Sensoreinrichtung 32 einwirken. Wird durch die Sensoreinrichtung 32 eine Kippbewegung zwischen dem Fahrzeugrahmen 12 und der Hinterachsbaugruppe 18 festgestellt, so sendet diese Sensoreinrichtung 32 in Abhängigkeit des zurückgelegten Weges über eine Steuerleitung 60 ein Signal an die Steuerung 58. Die Steuerung 58 reduziert daraufhin die Drehzahl des Motors 36 solange, bis das Ende der Schlittenführung 28 und damit das Ende der Kippbewegung erreicht ist. Zur Stromversorgung der Steuerung 58 ist eine Batterie 62 vorgesehen.

Zu dem Hydraulikkreis ist noch zu bemerken, daß ein Überdruckventil 64 zur Absicherung des Hydraulikkreises und ein Druckmeßanschluß 66 vorgesehen sind.

Im Fahrstand weist der Gabelstapler 10 neben den Steuerelementen 56 noch einen Fahrersitz 68 und ein Lenkrad 70 auf.

## Patentansprüche

1. Lastaufnahmefahrzeug, insbesondere Gabelstapler, umfassend einen Fahrzeugrahmen (12) mit einer Vorderachse (14) und mit einer eine lenkbare Hinterachse (16) aufweisenden Hinterachsbaugruppe (18), wobei mindestens ein Rad der Vorderachse (14) oder/und der Hinterachsbaugruppe (16) antreibbar ist, eine vorderachsnah an dem Fahrzeugrahmen (12) oder der Vorderachse angeordnete Lastaufnahme (22), wenigstens ein an dieser Lastaufnahme (22) angreifendes, die Größe eines Lastmoments beeinflussendes Kraftgerät (24, 52), eine Antriebs- und Steuereinrichtung (36, 38, 58) für das Kraftgerät (24, 52), und eine Sicherheitseinrichtung (32) gegen Kippen um die Vorderachse (14), die in Wirkverbindung mit der Antriebs- und Steuereinrichtung (36, 38, 58) für das Kraftgerät (24, 52) und/oder einem Warnsignalgeber steht, wobei der Fahrzeugrahmen (12) gegenüber der Hinterachsbaugruppe (18) bei Überschreiten eines Nennlastmoments begrenzt anhebbar ist und wobei die Sicherheitseinrichtung (32) eine Sensoreinrichtung zum Erfassen der Relativbewegung zwischen dem Fahrzeugrahmen (12) und der Hinterachsbaugruppe (18) aufweist, **dadurch gekennzeichnet,** daß die Hinterachsbaugruppe (18) durch eine annähernd vertikal verlaufende Schlittenführung (28) gegenüber dem Fahrzeugrahmen (12) geführt ist.

2. Lastaufnahmefahrzeug nach Anspruch 1,
dadurch gekennzeichnet, daß der Fahrzeugrahmen (12) in Ruhestellung durch Anschläge gegenüber der Hinterachsbaugruppe (18) abgestützt ist.

3. Lastaufnahmefahrzeug nach Anspruch 1 oder 2,
dadurch gekennzeichnet, daß zwischen dem Fahrzeugrahmen (12) und der Hinterachsbaugruppe (18) eine in Ruhestellung vorgespannte Federung (30) vorgesehen ist, welche dem Schwerkraftmoment des Fahrzeugrahmens (12) entgegenwirkt.

4. Lastaufnahmefahrzeug nach Anspruch 3,
dadurch gekennzeichnet, daß die Federung (30) und/oder das Eigengewicht der Hinterachsbaugruppe (18) derart bemessen sind, daß bei ansprechender Sensoreinrichtung (32) noch ein ausreichender Raddruck der Hinterachsbaugruppe (18) vorhanden ist.

5. Lastaufnahmefahrzeug nach einem der Ansprüche 1 bis 4, dadurch gekennzeichnet, daß die Sensoreinrichtung (32) ein Ja/Nein-Sensor, insbesondere Schalter, ist.

6. Lastaufnahmefahrzeug nach einem der Ansprüche 1 bis 4, dadurch gekennzeichnet, daß die Sensoreinrichtung (32) eine Analogsensoreinrichtung ist, welche ein in Abhängigkeit vom Anhebeweg variables Signal liefert.

7. Lastaufnahmefahrzeug nach Anspruch 6,
dadurch gekennzeichnet, daß die Analogsensoreinrichtung (32) ein Schiebewiderstand, insbesondere Potentiometer, ist.

8. Lastaufnahmefahrzeug nach einem der Ansprüche 1 bis 7, dadurch gekennzeichnet, daß die Sensoreinrichtung (32) mit einer Steuerung zur Drehzahlregelung eines Antriebsmotors (36) einer Hydraulikpumpe (38) verbunden ist, welche das hydraulisch wirkende Kraftgerät (24, 52) versorgt.

9. Lastaufnahmefahrzeug nach einem der Ansprüche 1 bis 8, dadurch gekennzeichnet, daß das Kraftgerät (24) ein Hubkraftgerät, insbesondere Hubzylinder, für einen längs eines Hubgerüstes (20) höhenverstellbaren Lastträger (22) ist.

10. Lastaufnahmefahrzeug nach einem der Ansprüche 1 bis 9, dadurch gekennzeichnet, daß das Kraftgerät (52) ein Neigungsverstellkraftgerät, insbesondere Neigungsverstellzylinder, zur Neigungsverstellung eines Hubgerüstes (20) der Lastaufnahme (22) ist.

11. Lastaufnahmefahrzeug nach einem der Ansprüche 1 bis 10, dadurch gekennzeichnet, daß zwischen der Hinterachsbaugruppe (18) und dem Fahrzeugrahmen (12) ein im wesentlichen vertikal, vorzugsweise hydraulisch wirkender Stoßdämpfer (34) angeordnet ist.

12. Lastaufnahmefahzeug nach einem der Ansprüche 1 bis 11, dadurch gekennzeichnet, daß der mit der Sensoreinrichtung (32) verbundene Warnsignalgeber ein akustisches und/oder optisches Warnsignal erzeugt.

13. Lastaufnahmefahrzeug nach einem der Ansprüche 1 bis 12, dadurch gekennzeichnet, daß der Anhebeweg des Fahrzeugrahmens (12) so klein wie möglich ist und insbesondere im Bereich von 10 bis 20 mm liegt.

## Claims

1. A load-handling vehicle, in particular a fork-lift truck, comprising a vehicle chassis (12) with a front axle (14) and with a rear-axle assembly (18) having a steerable rear axle (16), wherein at least one wheel of the front axle (14) and/or of rear-axle assembly (16) can be driven, a load-handling means (22) arranged near the front axle on the vehicle chassis (12) or the front axle, at least one powered appliance (24, 52) engaging on this load-handling means (22) and influencing the magnitude of a load moment, a drive and control device (36, 38, 58) for the powered appliance (24, 52), and a safety device (32) to prevent tilting about the front axle (14), which is in operative connection with the drive and control device (36, 38, 58) for the powered appliance (24, 52) and/or with a warning signal transmitter, wherein the vehicle chassis (12) can be raised to a limited extent in relation to the rear-axle assembly (18) when a nominal load moment is exceeded and wherein the safety device (32) has a sensor means for detecting the relative movement between the vehicle chassis (12) and the rear-axle assembly (18), characterised in that the rear-axle assembly (18) is guided by an approximately vertically extending carriage guide (28) in relation to the vehicle chassis (12).

2. A load-handling vehicle according to Claim 1, characterised in that in the inoperative position the vehicle chassis (12) is supported by stop members in relation to the rear-axle assembly (18).

3. A load-handling vehicle according to Claim 1 or 2, characterised in that a suspension unit (30) is provided between the vehicle chassis (12) and the rear-axle assembly (18), which suspension unit is preloaded in the inoperative position and which counteracts the moment of gravitational force of the vehicle chassis (12).

4. A load-handling vehicle according to Claim 3, characterised in that the suspension unit (30) and/or the unladen weight of the rear-axle assembly (18) are of such dimensions that when a sensor means (32) responds there is still sufficient wheel load of the rear-axle assembly (18).

5. A load-handling vehicle according to any one of Claims 1 to 4, characterised in that the sensor means (32) is a yes/no sensor, in particular a switch.

6. A load-handling vehicle according to any one of Claims 1 to 4, characterised in that the sensor means (32) is an analog sensor means which delivers a signal varying as a function of the raising travel.

7. A load-handling vehicle according to Claim 6, characterised in that the analog sensor means (32) is a slide resistor, in particular a potentiometer.

8. A load-handling vehicle according to any one of Claims 1 to 7, characterised in that the sensor means (32) is connected to a control system for controlling the speed of a drive motor (36) of a hydraulic pump (38) which supplies the hydraulically operated powered appliance (24, 52).

9. A load-handling vehicle according to any one of Claims 1 to 8, characterised in that the powered appliance (24) is a lifting powered appliance, in particular a lift cylinder, for a load-carrying member (22) vertically adjustable along a lift frame (20).

10. A load-handling vehicle according to any one of Claims 1 to 9, characterised in that the powered appliance (52) is an inclination-adjusting powered appliance, in particular an inclination-adjusting cylinder, for adjusting the inclination of a lift frame (20) of the load-handling means (22).

11. A load-handling vehicle according to any one of Claims 1 to 10, characterised in that a substantially vertical, preferably hydraulically acting, shock absorber (34) is disposed between the rear-axle assembly (18) and the vehicle chassis (12).

12. A load-handling vehicle according to any one of Claims 1 to 10, characterised in that the alarm signal transmitter connected to the sensor means (32) generates an acoustic and/or visual warning signal.

13. A load-handling vehicle according to any one of Claims 1 to 12, characterised in that the raising travel of the vehicle chassis (12) is as small as possible and, in particular, is within the range of 10 to 20 mm.

## Revendications

1. Véhicule porte-charge, en particulier chariot à fourche, comportant un châssis de véhicule (12) avec un essieu avant (14) et un sous-ensemble d'essieu arrière (18) comportant un essieu arrière orientable (16), une roue au moins de l'essieu avant (14) ou/et le sous-ensemble d'essieu arrière (7) pouvant être entraîné, un porte-charge (22) placé à proximité de l'essieu avant sur le châssis (12) ou l'essieu avant, au moins un actionneur (24, 52) agissant sur ce porte-charge (22), influençant la grandeur d'un couple de charge, un dispositif d'entraînement et de commande (36, 38, 58) pour l'actionneur (24, 52), et un dispositif de sécurité (32) contre un basculement autour de l'essieu avant (14), qui est en liaison active avec le dispositif d'entraînement et de commande (36, 38, 58) pour l'appareil moteur (24, 52) et/ou avec un générateur de signaux d'avertissement, le châssis (12) du véhicule pouvant être relevé de manière limitée par rapport au sous-ensemble d'essieu arrière (18), en cas de dépassement d'un couple de charge nominal et le dispositif de sécurité (32) comportant un dispositif à capteur destiné à détecter le déplacement relatif entre le châssis (12) du véhicule et le sous-ensemble d'essieu arrière (18), caractérisé en ce que le sous-ensemble d'essieu arrière (18) est guidé, par rapport au châssis (12) du véhicule, par un guidage à chariot (28) s'étendant sensiblement verticalement.

2. Véhicule porte-charge selon la revendication 1, caractérisé en ce que le châssis (12) en position de repos est soutenu par rapport au sous-ensemble d'essieu arrière (18), par des butées.

3. Véhicule porte-charge selon les revendications 1 ou 2, caractérisé en ce qu'entre le châssis (12) et le sous-ensemble d'essieu arrière (18) il est prévu une suspension à ressort (30) précontrainte en position de repos, qui s'oppose au couple dû à la force de gravité du châssis (12).

4. Véhicule porte-charge selon la revendication 3, caractérisé en ce que la suspension à ressort (30) et/ou le poids propre du sous-ensemble d'essieu arrière (18) ont des dimensions telles que lorsque le dispositif à capteur (32) réagit, il existe encore une pression de roues suffisante du sous-ensemble d'essieu arrière.

5. Véhicule porte-charge selon l'une des revendications 1 à 4, caractérisé en ce que le dispositif à capteur (32) est un capteur du type "tout ou rien", en particulier un commutateur.

6. Véhicule porte-charge selon l'une des revendications 1 à 4, caractérisé en ce que le dispositif à capteur (32) est un dispositif à capteur analogique, qui fournit un signal variable en fonction de la course de levage.

7. Véhicule porte-charge selon la revendication 6, caractérisé en ce que le dispositif à capteur analogique (32) est une résistance à curseur, en particulier un potentiomètre.

8. Véhicule porte-charge selon l'une des revendications 1 à 7, caractérisé en ce que le dispositif à capteur (32) est relié à une commande de réglage de vitesse de rotation d'un moteur d'entraînement (36) d'une pompe hydraulique (38), qui alimente l'actionneur (24, 52) hydraulique.

9. Véhicule porte-charge selon l'une des revendications 1 à 8, caractérisé en ce que l'actionneur (24) est un moyen de levage, en particulier un vérin, pour un porte-charge (22) réglable en hauteur le long d'un mat de levage (20).

10. Véhicule porte-charge selon l'une des revendications 1 à 9, caractérisé en ce que l'actionneur (52) est un moyen de réglage d'inclinaison, en particulier un vérin d'inclinaison, pour le réglage de l'inclinaison d'un mât de levage (20) du porte-charge (22).

11. Véhicule porte-charge selon l'une des revendications 1 à 10, caractérisé en ce qu'entre le sous-ensemble d'essieu arrière (18) et le châssis (12) du véhicule il est prévu un amortisseur (34) agissant sensiblement verticalement, de préférence hydrauliquement.

12. Véhicule porte-charge selon l'une des revendications 1 à 11, caractérisé en ce que le générateur de signaux d'avertissement, relié au dispositif à capteur (32), produit un signal d'avertissement acoustique et/ou optique.

13. Véhicule porte-charge selon l'une des revendications 1 à 12, caractérisé en ce que la course de relevage du châssis (12) est aussi petite que possible et est comprise en particulier entre 10 et 20 mm.
